(19) Europäisches Patentamt
European Patent Office
Office européen des brevets

(11) Veröffentlichungsnummer: **0 224 835 B1**

(12) **EUROPÄISCHE PATENTSCHRIFT**

(45) Veröffentlichungstag der Patentschrift: **22.01.92**

(51) Int. Cl.5: **C09J 161/04**, C08G 8/38

(21) Anmeldenummer: **86116267.5**

(22) Anmeldetag: **24.11.86**

# (54) Verfahren zum Verkleben von Folien, Formkörpern sowie faser- und pulverförmigen Materialien.

(30) Priorität: **30.11.85 DE 3542367**

(43) Veröffentlichungstag der Anmeldung:
**10.06.87 Patentblatt 87/24**

(45) Bekanntmachung des Hinweises auf die Patenterteilung:
**22.01.92 Patentblatt 92/04**

(84) Benannte Vertragsstaaten:
**AT BE CH DE ES FR GB IT LI LU NL SE**

(56) Entgegenhaltungen:
**EP-A- 0 010 724**
**EP-A- 0 027 222**
**EP-A- 0 055 212**
**EP-A- 0 168 870**

(73) Patentinhaber: **BASF Aktiengesellschaft**
**Carl-Bosch-Strasse 38**
**W-6700 Ludwigshafen(DE)**

(72) Erfinder: **Ley, Gregor, Dr.**
**In den Trankstuecken**
**W-6719 Wattenheim(DE)**
Erfinder: **Aydin, Oral, Dr.**
**Sophienstrasse 14**
**W-6800 Mannheim 1(DE)**
Erfinder: **Fickeisen, Peter**
**Hauptstrasse 45**
**W-6716 Dirmstein(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Verkleben von Folien, Formkörpern sowie faser- und pulverförmigen Materialien aus Kunststoffen, Papier, Holz und Metallen untereinander oder miteinander.

Beschichtungsmittel auf Basis einer Kombination aus Primärdispersionen und Phneolformaldehydharzen sind bekannt. So wird in der US-PS 3 538 972 ein Bindemittel für eine Textilbeschichtung beschrieben, bei der eine Primärdispersion mit einem Präkondensat eines Phenolharzes vermischt wird. Nach Zugabe weiteren Formaldehyds wird in basischem Milieu die Beschichtung ausgehärtet. In der US-PS 3 784 496 wird ein Bindemittel für eine Holzbeschichtung beschrieben, bei der eine Primärdispersion mit einem Präkondensat eines Phenolharzes vermischt wird. In den US-PS 3 944 703, US-PS 4 246 144 und US-PS 4 316 968 werden Bindemittel für Glasfaserbeschichtungen aus einem Präkondensat eines Phenolharzes und einer Primärdispersion beschrieben. Den DE-OS 17 20 301 und DE-OS 19 47 964 sind kautschukmodifizierte Novolake zu entnehmen. Der Kautschuklatex kann vor oder während der Reaktion des Aldehyds mit dem Phenol zugegeben werden. Als zweckmäßig wird jedoch angegeben, den Kautschuklatex nach Ende der Phenol/Aldehyd-Reaktion zuzufügen. Man erhält nach diesem Verfahren keine stabile Dispersion sondern feste Novolakharze. In der US-PS 4 316 827 wird ein Verfahren zur Herstellung gehärteter Harzteilchen beschrieben, wobei im wäßrigen Medium Phenole mit einem Aldehyd in Gegenwart eines basischen Katalysators, eines Schutzkolloids und eines Kautschuk-Latex umgesetzt und nach dem Ansäuern die Teilchen vom wäßrigen Medium abgetrennt werden. Als Kautschukdispersionen werden hier u.a. carboxilierte Butadien/Acrylnitril-, Styrol/Butadien-und Polyacrylat-Latices genannt. All diese Verfahren zur Herstellung von Beschichtungsmittel aus einer Kombination einer Primärdispersion und eines Polykondensates auf Basis von Phenol und Aldehyden liefern keine stabilen kolloidalen Gesamtsysteme. Sie sind daher für die Verwendung zur Herstellung von lagerstabilen Klebstoffen nicht geeignet. In der DE-AS 26 56 074 werden wärmehärtbare Klebstoffe auf Basis eines Acrylnitrilpolymerisats und eines Phenolharzes beschrieben, die jedoch zusätzlich ein Melamin-Formaldehyd- und/oder ein Harnstoff-Formaldehyd-Harz enthalten müssen und zusätzlich meist ein thermoplastisches Acrylpolymer mit relativ niedrigem Molekulargewicht sowie einen Härtungskatalysator enthalten sollen. Die aus mindestens drei getrennt hergestellten Harzkomponenten sowie Hilfsstoffen hergestellten Latex-artigen Mischungen sind jedoch nicht lagerstabil und müssen daher alsbald verarbeitet werden. Das geht auch aus der DE-AS selbst hervor, in der in Spalte 5, Zeile 27ff auf entsprechende Schwierigkeiten der Verarbeitbarkeit hingewiesen ist.

Der vorliegenden Erfindung lag die Aufgabe zugrunde, ein Verfahren zum Verkleben von Folien, Formkörpern sowie faser- und pulverförmigen Materialien unter Verwendung von lagerstabilen Primärdispersionen zur Verfügung zu stellen.

Gegenstand der vorliegenden Erfindung ist ein Verfahren zum Verkleben von Folien, Formkörpern sowie faser- und pulverförmigen Materialien aus Kunststoffen, Papier, Holz und Metallen untereinander oder miteinander, indem man im wesentlichen schutzkolloidfreie Einkomponentensysteme auf Basis einer Kombination aus einer wäßrigen Primärdispersion eines synthetischen Polymeren, das Glycidyl-, Carbonyl-, N-Methylol-, N-Alkoxymethyl-, Ether-, Amino- und/oder Hydrazo-Gruppen sowie gegebenenfalls zusätzlich Carboxyl- oder Hydroxylgruppen enthält, und einem wasserunlöslichen Polykondensat aus Phenolen und Formaldehyd, Paraformaldehyd, Acetaldehyd oder deren Gemische im Gewichtsverhältnis synthetisches Polymerisat : Phenol-Aldehyd Polykondensat von 99 : 1 bis ca. 1 : 1, wobei die phenolischen Komponenten des Polykondensats zunächst mit einer wäßrigen Primärdispersion eines synthetischen Polymeren vermischt und in diesem Gemisch dann die Polykondensation mit den Aldehyden, die teilweise durch Ketone ersetzt sein können, unter üblichen Bedingungen durchgeführt worden ist, verwendet.

Als phenolische Komponenten sollen vorzugsweise solche eingesetzt werden, die eine Löslichkeit von weniger als 10 g in 100 g Wasser von 20 °C bei pH <5 aufweisen, insbesondere z.B. Bisphenol A oder dessen Gemische mit Phenol, alkylsubstituierten Phenolen und/oder Hydroxybiphenyl.

Als Aldehyde werden für die Polykondensation Formaldehyd, Paraformaldehyd, Acetaldehyd oder deren Gemische eingesetzt.

Als bevorzugtes Mischungsverhältnis synthetisches Polymerisat : Phenol-Aldehyd-Polykondensat (erfindungsgemäß in Gegenwart der wäßrigen Polymerdispersion hergestellt) wendet man 2 : 1 bis 49 : 1 an.

Gegenstand der vorliegenden Erfindung ist außerdem die Verwendung zur Verklebung von Kunststoffolien, zur Verklebung von Kunststoffolien mit Metallen, sowie zur Herstellung von Mehrschichtlaminaten aus natürlichem und/oder synthetischem Fasermaterial.

Die erfindungsgemäßen Dispersionen können weiter vorteilhaft als Bindemittel bei der Herstellung von Schleifmaterialien wie Schleifpapieren, -bändern und -körpern eingesetzt werden. Auch hier werden bisher Mehrkomponentensysteme mit begrenzter Verarbeitungszeit (pot life) verwendet.

Demgegenüber zeichnen sich die erfindungsgemäßen Bindemittel durch praktisch unbegrenztes pot life aus, d.h. die Systeme können in verwendungsfähiger Form angeliefert und wie normale Dispersionen 6 bis 12 Monate gelagert werden.

Erfindungsgemäß wird die gegebenenfalls verdünnte Primärdispersion zunächst mit der phenolischen Komponente des Harzes versetzt und vorzugsweise bei erhöhter Temperatur, beispielsweise bei etwa 50 bis 150 °C, verrührt. Nach der Verteilung der phenolischen Komponente in der Primärdispersion erfolgen dann nach Zugabe entsprechender Aldehyd-und/oder Ketonmengen eine oder mehrere Kondensationsphasen, wobei je nach Reaktionsbedingungen novolak-, resol-, resitol- oder resitartige Harze erhalten werden. Überraschenderweise bleibt dabei das kolloidale Gesamtsystem erhalten und man erhält lagerstabile dünnflüssige Dispersionen, die Teilchengrößen <1 µm ∅ besitzen, praktisch keine organische Lösungsmittel enthalten und zur Herstellung von Klebstoffen geeignet sind. Diese eignen sich insbesondere zur Verklebung von Kunststoff- oder Metallfolien mit sich selbst, anderen Laminaten oder Formteilen und zeichnen sich durch gleichbleibend gute Verarbeitbarkeit während der gesamten Lagerzeit aus. Verglichen mit konventionellen Dispersionsklebern besitzen die erzielten Verbunde ausgezeichnete Wärmestandfestigkeiten.

Zu den für das erfindungsgemäße Verfahren einzusetzenden Aufbaukomponenten ist im einzelnen folgendes auszufuhren.

Als wäßrige Primärdispersionen des synthetischen Polymeren eignen sich übliche Primärdispersionen, die Copolymerisate stabil dispergiert enthalten, insbesondere solche, die eine ausreichende Stabilität gegenüber pH-Wert-Änderungen sowie ausreichende Verträglichkeit mit der phenolischen Komponente des Polykondensatharzes aufweisen.

Die Glycidyl-, Carbonyl-, N-Methylol-, N-Alkoxymethyl-, Ether-, Amino- und/oder Hydrazogruppen sowie Carboxyl- oder Hydroxylgruppen enthaltenden Copolymerisate der Primärdispersionen werden auf übliche Weise durch Einpolymerisieren entsprechender Monomerer, die diese funktionellen Gruppen tragen, erhalten.

Glycidylgruppen enthaltende Copolymerisate lassen sich z.B. durch Einpolymerisieren von Glycidylacrylat, Glycidylmethacrylat oder anderen olefinisch ungesättigten Glycidylverbindungen, wie sie beispielsweise durch Umsetzung von Di-, Tri- oder Tetraepoxidverbindungen mit Acrylsäure oder Methacrylsäure hergestellt werden können, erhalten.

Carbonylgruppen enthaltende Copolymerisate können durch Einpolymerisieren von ungesättigten Aldehyden und/oder Ketonen, wie z.B. Acrolein, Methacrolein, Crotonaldehyd, Formylstyrol, Vinylmethylketon, Methylisopropenylketon, Diacetonacrylat, Diacetonacrylamid und/oder Butandiol-1,4-acrylatacetylacetat erhalten werden.

N-Methylol- resp. N-Alkoxymethylgruppen können z.B. durch Einpolymerisieren entsprechender Monomeren wie N-Methylol(meth)acrylamid bzw. N-Butoxymethyl(meth)acrylamid in das Copolymere der Primärdispersionen eingebaut werden.

Ethergruppen enthaltende Copolymerisate kann man z.B. durch Einpolymerisieren von Alkoxy(meth)-acrylaten mit 2 bis 10 Kohlenstoffatomen in den Alkoxygruppen, Estern der Acrylsäure oder Methacrylsäure mit Oxaalkandiolen mit 2 bis 20 Kohlenstoffatomen in den Oxaalkangruppen, wobei diese letztgenannten Ester neben Ethergruppen Hydroxylgruppen enthalten können, erhalten.

Aminogruppenhaltige Copolymerisate können durch Einpolymerisieren entsprechender aminogruppensubstituierter (Meth)acrylester oder (Meth)acrylamide, z.B. Dimethylaminoethyl(meth)acrylat, Diethylaminoethyl(meth)acrylat, Dimethylaminoethyl(meth)acrylamid, Diethylaminoethyl(meth)acrylamid, Dimethylaminopropyl(meth)acrylamid oder N-tert.-butylaminoethyl(meth)acrylat erhalten werden. Aminogruppenhaltige Copolymerisate können auch durch polymeranaloge Umsetzung von z.B. Glycidylgruppen enthaltenden Copolymerisaten mit Ammoniak, primären oder sekundären Aminen oder Alkanolaminen erhalten werden.

Hydrazogruppenhaltige Copolymerisate kann man beispielsweise durch Einpolymerisieren von carbonylgruppenhaltigen Monomeren der oben genannten Art und Umsetzung mit Hydrazin oder Dihydraziden, wie z.B. Adipinsäuredihydrazid erhalten.

Carboxylgruppen lassen sich beispielsweise durch Einpolymerisieren von $\alpha,\beta$-olefinisch ungesättigten Carbonsäuren, wie z.B. Acrylsäure, Methacrylsäure, Acrylamidoglykolsäure oder Crotonsäure oder olefinisch ungesättigten Dicarbonsäuren, wie Maleinsäure, Fumarsäure, Itaconsäure oder entsprechenden Dicarbonsäuremonoestern, wie z.B. Maleinsäure- oder Fumarsäuremonoalkylestern mit 1 bis 4 Kohlenstoffatomen in den Alkylgruppen einführen.

Hydroxylgruppen lassen sich beispielsweise durch Einpolymerisieren von Hydroxyalkylacrylaten oder Hydroxyalkylmethacrylaten mit 2 bis 8, vorzugsweise 2 bis 4 Kohlenstoffatomen in den Alkylgruppen, wie z.B. Hydroxyethyl(meth)acrylat, Hydroxypropyl(meth)acrylat, Butandiol-1,4-mono(meth)acrylat oder von olefinisch ungesättigten Alkoholen, wie Allylalkohol einführen.

In den synthetischen Polymeren (Copolymerisaten) der wäßrigen Primärdispersionen können jeweils eine oder mehrere der genannten funktionellen Gruppen vorliegen.

Die bevorzugten Copolymerisate der wäßrigen Primärdispersionen enthalten die oben genannten funktionellen Gruppen im allgemeinen in solchen Mengen, daß sie 0,1 bis 50, vorzugsweise 0,3 bis 15, insbesondere 0,5 bis 10 Gew.%, bezogen auf das Copolymerisat, dieser Monomeren mit funktionellen Gruppen einpolymerisiert enthalten.

Als Comonomere der Monomeren mit den oben genannten funktionellen Gruppen eignen sich die üblichen, damit copolymerisierbaren olefinisch ungesättigten Monomeren, wie z.B. die Ester der Acrylsäure und/oder Methacrylsäure mit 1 bis 12, vorzugsweise 1 bis 8 Kohlenstoffatome enthaltenden geradkettigen oder verzweigten Monoalkanolen, wie z.B. Methyl(meth)acrylat, Ethyl(meth)acrylat, Propyl(meth)acrylat, Butyl(meth)acrylat, 2-Ethylhexyl(meth)acrylat und Lauryl(meth)acrylat; Vinylester von 2 bis 4 Kohlenstoffatome enthaltenden Carbonsäuren, wie z.B. Vinylacetat und Vinylpropionat, Malein- bzw. Fumarsäuredialkylester von 1 bis 4 Kohlenstoffatome enthaltenden Monoalkanolen, Vinylaromaten, wie z.B. Styrol, $\alpha$-Methylstyrol, Vinyltoluol; Acrylnitril, Methacrylnitril, in geringen Mengen von bis zu 5 Gew.% des Copolymeren Acrylamid, Methacrylamid sowie Vinylether mit 3 bis 10 Kohlenstoffatomen, Vinylhalogenide, wie Vinylchlorid und Vinylidenchlorid; mehrfach olefinisch ungesättigte Verbindungen, wie Butadien und Isopren, sowie Gemische der oben genannten Monomeren, soweit sie miteinander copolymerisierbar sind.

Bevorzugte Comonomere sind Acrylsäureester, Methacrylsäureester, (Meth)acrylnitril, Vinylchlorid, Vinylidenchlorid, Styrol und Butadien.

Die Herstellung der erfindungsgemäß zu verwendenden Primärdispersionen kann nach üblichen Methoden durch Emulsionspolymerisation der Monomeren in wäßriger Dispersion in Gegenwart von anionischen oder nichtionischen Emulgatoren, wie sie etwa in "H. Stache, Tensid-Taschenbuch", Karl Hanser-Verlag 1979 beschrieben sind, z.B. Na-laurylsulfat, Na-dodecylbenzolsulfonat, Na-salze von sauren Schwefelsäureestern von Addukten aus Oktyl- oder Nonylphenol mit 5 bis 50 mol Ethylenoxid, Addukte von Oktyl- oder Nonylphenol mit 5 bis 50 mol Ethylenoxid, Fettalkohol-Ethylenoxidaddukte, Gemische von anionischen und nichtionischen Emulgatoren , Polymerisationsinitiatoren, wie z.B. Peroxidisulfate bzw. Redoxsystemen, gegebenenfalls Puffersubstanzen, wie $K_2P_2O_7$ bei Temperaturen zwischen 30 und 150 °C erfolgen. Geeignete Methoden zur Emulsionspolymerisation von Monomerengemischen sind beispielsweise in Houben-Weyl, Methoden der organischen Chemie, Band 14/1 beschrieben.

Es ist vorteilhaft, wenn die Primärdispersionen über eine ausreichende Stabilität, insbesondere gegenüber pH-Wert-Änderungen verfügen. Eine gewisse Verträglichkeit der phenolischen Bausteine des Polykondensats mit den Polymerteilchen ist ebenfalls von Vorteil.

Als phenolische Komponenten für das erfindungsgemäß in der wäßrigen Primärdispersion herzustellende Phenolharz können z.B. folgende Phenole verwendet werden: Phenol, alkylsubstituierte Phenole mit 1 bis 12 Kohlenstoffatomen in der Alkylgruppe, wie Octyl-, Nonyl-, Dodecylphenol, aryl-substituierte Phenole wie z.B. 2-Hydroxy-biphenyl, 4-Hydroxy-biphenyl, Bisphenole der allgemeinen Formel

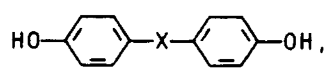

worin X einen (verzweigten) Alkylrest mit 1 bis 12, vorzugsweise 3 bis 7 Kohlenstoffatomen oder auch $-SO_2-$ bedeutet, insbesondere 4,4'-Dihydroxy-diphenyl-propan (Bisphenol A) und 4,4'-Dihydroxydiphenyl-sulfon (Bisphenol S) oder deren Mischungen. Bevorzugt sind Bisphenol A und Bisphenol S, insbesondere Gemische von Bisphenol A mit Bisphenol S, alkylsubstituierten Phenolen, Phenol und/oder Hydroxybiphenyl.

Die erfindungsgemäß einzusetzenden phenolischen Komponenten sollen vorzugsweise nicht oder nur wenig wasserlöslich sein, d.h. eine Löslichkeit von weniger als 10 g/100 g Wasser bei 20 °C und pH <5 aufweisen.

Als Carbonylkomponente für die Kondensation, d.h. als Aldehyde, die teilweise durch Ketone ersetzt sein können, kommen Formaldehyd, Paraformaldehyd und Acetaldehyd in Betracht.

Das molare Verhältnis der phenolischen Komponente zu Carbonylgruppen der Aldehyde und/oder Ketone kann zwischen etwa 0,33:1 bis 1,25:1 variiert werden. Bevorzugt ist ein Verhältnis von 0,4:1 bis 0,67:1. Besonders bevorzugt ist ein Verhältnis von etwa 0,5:1.

Zunächst wird die phenolische Komponente mit der wäßrigen Primärdispersion, beispielsweise unter Rühren, vorzugsweise bei 50 bis 150 °C, gegebenenfalls unter Druck vermischt. Die phenolischen Komponenten können in fester oder flüssiger Form zur wäßrigen Primärdispersion zugegeben werden, wobei gegebenenfalls die Temperatur zum Zeitpunkt der Zugabe niedriger ist als bei dem nachfolgenden Einmischen.

Die Kondensation von phenolischer Komponente mit Aldehyd (oder Keton) zur Bildung des Polykondensats in der wäßrigen Primärdispersion kann bei Temperaturen zwischen Raumtemperatur und etwa 200 °C, gegebenenfalls unter Druck, vorzugsweise zwischen 50 und 100 °C bei dem "natürlichen" pH-Wert der Primärdispersion, gegebenenfalls auch unter Zusatz von sauren oder basischen Katalysatoren wie anorganischen oder organischen Säuren, Ammoniak oder Aminen durchgeführt werden. Abhängig von den Kondensationsbedingungen und den verwendeten Katalysatoren werden unterschiedlich reaktive Harze gewonnen. Bisweilen ist es günstig, die Kondensation zunächst bei dem meist sauren "natürlichen" pH-Wert der Primärdispersion oder unter Zusatz saurer Katalysatoren zu beginnen und dann später nach Neutralisation im alkalischen Bereich bei pH-Werten von 8 bis 10 fortzusetzen. Das Mischungsverhältnis Copolymerisat/Phenolharz kann von 99:1 bis ca. 1:1 variiert werden, bevorzugt ist ein Mischungsverhältnis von 2:1 bis 49:1; die obere Grenze für das Verhältnis Phenolharz/Copolymer der Primärdispersion ist durch das Auftreten neuer Teilchenpopulationen aus reinem Phenolharz gegeben, die stets erheblich größere Teilchendurchmesser (Ø >10 µ) besitzen und - besonders bei basisch katalysierten Harzen - bereits in Mengen von wenigen Gewichtsprozenten eine deutliche Trübung des reinen Bindemittelfilms hervorrufen. Der Feststoffgehalt der phenolharzhaltigen Dispersion kann zwischen 10 und 70 Gew.%, vorzugsweise zwischen 30 und 60 Gew.% liegen.

Die für das erfindungsgemäße Verfahren verwendeten phenolharzhaltigen Polymerisatdispersionen sind lagerstabil und eignen sich besonders vorteilhaft als Klebstoffe für wärmestandfeste Verklebungen, insbesondere zur Verklebung von Kunststoffolien, zur Verklebung von Kunststoffolien mit Metallen, wie Kunststoffolien oder Laminaten mit Metallen, wie Kupfer, Messung und Aluminium, sowie zur Herstellung von Mehrschichtlaminaten, die eine gute Wasserfestigkeit, guten Korrosionsschutz, gute Chemikalienbeständigkeit, gute Haftung und gute mechanische Eigenschaften wie z.B. hohe Trennfestigkeiten über einen weiten Temperaturbereich aufweisen.

Zur Herstellung von Mehrschichtlaminaten können natürliche und/oder synthetische Fasern, wie z.B. Baumwolle, Cellulose, Glasfasern, Polyesterfäden und/oder Kohlenstoffasern eingesetzt werden.

Die Dispersionen werden im allgemeinen bei RT bis 90 °C auf die Substrate aufgebracht, die bei RT bis 100 °C vorgetrocknet und bei Temperaturen bis 160 °C, Drücken bis 100 bar und Verweilzeiten bis 15 min. verpreßt werden.

Herstellung der Primärdispersion A

In einem Reaktionsgefäß wurden 20 g VE-Wasser (= vollentsalztes Wasser) vorgelegt, mit Stickstoff gespült und auf 85 °C aufgeheizt. Dann gab man 6,2 g Zulauf 1 und 1 g Zulauf 2 zu, polymerisierte die Mischung 15 Minuten an und fuhr dann die Zuläufe 1 und 2 kontinuierlich in 2 bis 2,25 Stunden dem Reaktor zu. Man polymerisierte noch 2 Stunden nach und kühlte die Dispersion. Schließlich gab man noch Zulauf 3 zu und füllte die Mischung ab. Die Zuläufe waren wie folgt zusammengesetzt:

Zulauf 1

21 g n-Butylacrylat
20 g Ethylhexylacrylat
9 g Styrol
1,5 g Acrylsäure
1,25 g Acrylamid, 50 %ige wäßrige Lösung
3,75 g Nonylphenoloxethylat (mit ca. 25 Ethylenoxideinheiten/mol), 20 %ige wäßrige Lösung
1,9 g Na-Fettalkoholsulfonat, 40 %ige wäßrige Lösung
19,6 g VE-Wasser

Zulauf 2

0,25 g Na-Persulfat
10 g VE-Wasser

Zulauf 3

0,15 g Ammoniakwasser

Die entstandene Dispersion A hat einen Feststoffgehalt von ca. 49 Gew.%, einen pH-Wert von 4-5 und eine mittlere Teilchengröße um 150 nm (gemessen mit dem Nanosizer = NS).

Herstellung der phenolharzhaltigen Dispersion A/1

In einem Reaktionsgefäß wurden 200 g der Primärdispersion A, 20 g VE-Wasser, 2,2 g Dimethylethanolamin und 25 g Bisphenol A 1,5 Stunden lang bei 90° C verrührt. Dann gab man 20 g wäßrige Formaldehyd-Lösung (37 gew.%ig) und nach 1 Stunde weitere 4,4 g Dimethylethanolamin zu. Nach weiteren 4 Stunden Rührens bei 90° C erhielt man eine schwach gelb gefärbte, dünnflüssige Dispersion mit einem Feststoffgehalt von ca. 47 Gew.%, einem pH-Wert von 9,5-10,5 und einer praktisch unveränderten Teilchengröße von 150-160 nm (Nanosizer). Die Dispersion war bei Raumtemperatur mindestens 6 Monate lagerstabil.

Herstellung der phenolharzhaltigen Dispersion A/2

Man verfuhr wie oben beschrieben, verwendete jedoch 200 g der Primärdispersion A, 40 g VE-Wasser, 2,2 g Dimethylethanolamin und 50 g Bisphenol A im Ansatz. Man erhielt eine dünnflüssige lagerstabile Dispersion mit einem Feststoffgehalt von 47,8 Gew.%, einem pH-Wert von 8,5 und einer Teilchengröße von 230 nm (Nanosizer].

Herstellung und Prüfungen von Verklebungen

I. Die Dispersionen A, A/1 und A/2 wurden auf Polyesterfolie (100 µm dick) auf einem Streichtisch mit einer Schichtdicke 150 g/m$^2$ (naß) aufgebracht. In diese nasse Klebstoffschicht wurde ein Baumwollgewebe (Segeltuch) eingelegt und diese Verklebung in Raumtemperatur getrocknet. Ein Teil des so erhaltenen Verbundes wurde in einem Trockenschrank bei 30° C/10 Minuten nachgetempert. Die Wärmestandfestigkeit der Verklebung wurde an 5 cm breiten Streifen dieser Verbunde in einem Umlufttrockenschrank bei 90° C mit einem 300 g - Gewicht unter einem Winkel von 180° untersucht. Gemessen wurde die Ablaufstrecke in Abhängigkeit von der Prüfungszeit.

Die Ergebnisse sind in Tabelle 1 zusammengefaßt.

Tabelle 1:

| Polyester/Segeltuch-Verklebung | | | |
|---|---|---|---|
| Dispersion | nach Trocknung bei Raumtemperatur | nach Trocknung bei Raumtemperatur Temperung 130° C/10 min | |
| | nach 40 min | nach 40 min | nach 4 Std. |
| A | abgelaufen | abgelaufen | - |
| A/1 | abgelaufen | ca. 2 mm | ca. 3 mm |
| A/2 | abgelaufen | ca. 2 mm | ca. 2 mm |

II. Die Dispersionen A und A/2 wurden auf verschiedene Folien, Polyethylen 40 µ dick, Aluminium und Hart-Polyvinylchlorid, 60 µ dick naß auf einem Streichtisch aufgebracht. In die noch nasse Klebstoffschicht wurde Segeltuch eingelegt und die Verklebung abgelüftet.

Nach Trocknung der Verklebungen bei 70° C/3 Minuten wurde die Trennkraft an 2 cm breiten Streifen in einer Reißmaschine bei 100 mm/min Abzugsgeschwindigkeit bei Raumtemperatur und 70° C ermittelt. Die erhaltenen Werte sind in der Tabelle 2 zusammengestellt.

Tabelle 2

| Trennkraft in N/cm bei verschiedenen Temperaturen (RT = Raumtemperatur 23 °C) | | | | | | |
|---|---|---|---|---|---|---|
| Dispersion | Polyethylenfolie | | Hart-Polyvinylchlorid-Folie | | Alu-Folie | |
| | RT | 70 °C | RT | 70 °C | RT | 70 °C |
| A | 0,7 | 0,1 | 1,9 | 0,4 | 4,2 | 1,2 |
| A/2 | 3,1 | 1,0 | 2,5 | 0,8 | 5,5 | 1,9 |

Herstellung von phenolharzhaltigen Dispersionen auf Basis von Acronal® 12 DE, einer 40 gew.%igen Primärdispersion der BASF auf Basis von Acrylnitril/Acrylsäurebutylester (= Dispersion B)

Zu je 2000 g Dispersion B wurden jeweils 10 g Dimethylethanolamin und X g Bisphenol A zugegeben und der Ansatz 1,5 Stunden bei 90 °C verrührt, dann wurden nacheinander Y g wäßrige Formaldehyd-Lösung (37 gew.%ig) und sogleich weitere 18 g Dimethylethanolamin zugegeben und die Mischung 5 Stunden bei 90 °C gerührt. Man erhielt lagerstabile, dünnflüssige Dispersionen, deren wichtigste Kenngrößen in Tabelle 3 angegeben sind.

Tabelle 3

| Dispersion | X | Y | Feststoffgehalt | LD-Wert | d(NS) | pH |
|---|---|---|---|---|---|---|
| B/1 | 200 | 160 | 42,1 Gew.% | 85 % | 126 nm | 6,7 |
| B/2 | 150 | 120 | 43,5 Gew. % | 87 % | 125 nm | 7,0 |
| B/3 | 70 | 56 | 42,2 Gew.% | 90 % | 126 nm | 7,2 |
| B/4 | 34 | 27 | 32,0 Gew.% | - | 148 nm | 9,4 |
| (zur Herstellung der Dispersion B/4 wurden die 2000 g Acronal 12 DE mit 670 g VE-Wasser verdünnt eingesetzt) | | | | | | |

Herstellung und Prüfung der Verklebungen

Beschreibung der für die Verklebung verwendeten Proben (bei den Mischungen geben die Zahlen g an)

| Bezeichnung | Dispersionen bzw. deren Abmischungen |
|---|---|
| Probe P | B/1 |
| Probe C | A/3 |
| Probe D | B/4 |
| Probe E | Acronal 12 DE |
| Probe F[1)] | 90E + 10 Liquid-Resin R 19568[2)] |
| Probe G | 50E + 50P |
| Probe H | 60E + 40P |
| Probe K | 75E + 25P |
| Probe L | 85E + 15P |
| Probe M[1)] | 96E + 4 Liquid-Resin R 19568 |
| Probe N[1)] | 92E + 8 Liquid-Resin R 19568 |

1) Bei diesen Proben kommt es nach ca. 3 Tagen zu Ablagerungs- und Inhomogenitätserscheinungen. Diese Proben sind nicht lagerstabil.
2) Resin R 19568 ist ein Phenolharz der Fa. Bakelite

I. Mit den Proben N und H wurde ein ca. 200 µm starkes Polyestervlies getränkt und die überflüssige Klebstoffmenge abgequetscht. Die so behandelten Vliese wurden anschließend bei 100 °C/4 Minuten vorgetrocknet; Auftragsgewicht: 60 g/m$^2$ fest.

6 solche Vliese sowie eine Kupferfolie (25 g/m$^2$) wurden bei 160 °C/15 Minuten bei 100 bar-Druck

verpreßt und verklebt. Die Trennkraft der Verklebung zwischen Kupferfolie und Polyester-Verbund wurde in einer Reißmaschine bei einer Abzugsgeschwindigkeit von 100 mm/min bei Raumtemperatur ermittelt.

| Probe | Trennkraft in N an 5 cm breiten Streifen |
|---|---|
| N | 80 N, Materialanriß |
| H | 116 N, Materialanriß |

II. Die unten genannten Proben wurden auf einem 75 °C aufgeheizten Streichtisch auf eine Kupferfolie (25 $g/m^2$) mit einem Auftragsgewicht ca. 25 $g/m^2$ (fest) aufgebracht und kurz abgelüftet.

5 cm breite vorkaschierte Kupferfolie-Streifen wurden Schicht gegen Schicht 3 Minuten/100 bar/100 °C gegeneinander kaschiert.

Die Schälwerte wurden nach 24 Stunden bei Raumtemperatur mit einer Abzugsgeschwindigkeit von 100 mm/min ermittelt.

| Schälwerte Kupfer-Kupfer-Kaschierungen | | | | | | |
|---|---|---|---|---|---|---|
| Probe | F | G | H | K | L | C |
| Trennkraft N/5 cm | 60 | 60 | 60 | 60 | 66 | 62 |

III. Die Proben N und D wurden auf eine Kupferfolie (25 $g/m^2$) mit einer Schichtdicke 50 µm naß aufgebracht. In die noch nasse Klebschicht wurde Segeltuch eingelegt. Diese Verbunde wurden bei 75 °C/15 Minuten vorgetrocknet und bei 150 °C/100 bar/8 Minuten nachgepreßt. Die Trennkraft der Verbunde wurde ermittelt.

| Probe | Schälfestigkeit bei Raumtemperatur an 5 cm breiten Streifen in N |
|---|---|
| N | 64 N |
| D | 68 N |

## Vergleichsbeispiel 1

Herstellung des Phenolharzes

11,2 g Wasser und 11,2 g Ethylenglykol wurden mit etwas Schwefelsäure auf pH = 2,2 eingestellt. Dann gab man 11,2 g Bisphenol A und 11,2 g Octylphenyl hinzu. Die Phenole wurden bei 90 °C gelöst, dann mit 22,1 g wäßriger 30gew.%iger Formaldehydlösung versetzt und mit konzentriertem wäßrigem Ammoniak auf pH 8,5 eingestellt. Man kondensierte 3 Stunden bei 90 °C unter Rühren.

Die Mischung des entstandenen Phenolharzes mit 90 g der Primärdispersion ist auch bei 90 °C wegen der hohen Viskositätsunterschiede zwischen Phenolharz und Primärdispersion im Rührkolben praktisch unmöglich; das System trennt sofort wieder auf.

## Vergleichsbeispiel 1a

Herstellung des Phenolharzes

Man verfuhr wie in Vergleichsbeispiel 1 , setzte jedoch als phenolische Komponente nur 22,4 g Bisphenol A ein und stellte statt mit Ammoniak mit 2,5 g Dimethylethanolamin auf pH 8,5 ein.

Herstellung der Mischung

Das obige Phenolharz wird bei 90 °C mit 90 Teilen der Primärdispersion A versetzt. Es wird unter Rühren abgekühlt. Nach dem Abkühlen trennen sich Phenolharz und Primärdispersion sofort in 2 Phasen.

Vergleichsbeispiel 2

11,2 g Wasser und 11,2 g Ethylenglykol wurden mit etwas Schwefelsäure auf pH = 2,2 eingestellt. Dann gab man 11,2 g Bisphenol A und 11,2 g 4-Hydroxyl-biphenyl hinzu. Die Phenole wurden bei 90 °C gelöst, dann mit 22,1 g wäßriger 30gew.%iger Formaldehydlösung und 3 g Dimethylethanolamin versetzt. Man kondensierte 3 Stunden bei 90 °C unter Rühren.

Wie bei Vergleichsbeispiel 1 wurde die Mischung aus Phenolharz und Primärdispersion hergestellt. Man erhielt eine hochviskose Dispersion mit einem Feststoffgehalt von ca. 47 Gew.%, einem pH-Wert von etwa 9 und einem LD-Wert von ca. 50.

Vergleichsbeispiel 3

146,8 g Phenol, 364,5 g wäßrige 30gew.%ige Formaldehydlösung, 186,5 g Ethylglykol, 109,9 g Paraformaldehyd und 250,7 g Bisphenol A wurden unter Zusatz von 27,2 g Dimethylethanolamin bei 60 °C 6 Stunden unter Rühren kondensiert.

55,4 g dieses Phenolharzes wurden bei 90 °C mit 73 g der Primärdispersion A versetzt. Es wurde unter Rühren abgekühlt. Man erhielt als Mischung eine hochviskose Dispersion mit einem Feststoffgehalt von ca. 48 Gew.% und einem pH-Wert von ca. 6,5, die nach 2 Tagen Lagerung bei 80 °C durchvernetzt und nicht mehr fließfähig war.

## Patentansprüche

**1.** Verfahren zum Verkleben von Folien, Formkörpern sowie faser- und pulverförmigen Materialien aus Kunststoffen, Papier, Holz und Metallen untereinander oder miteinander, dadurch gekennzeichnet, daß man im wesentlichen schutzkolloidfreie Einkomponentensysteme auf Basis einer Kombination aus einer wäßrigen Primärdispersion eines synthetischen Polymeren, das Glycidyl-, Carbonyl-, N-Methylol-, N-Alkoxymethyl-, Ether-, Amino- und/oder Hydrazo-Gruppen sowie gegebenenfalls zusätzlich Carboxyl- oder Hydroxylgruppen enthält, und einem wasserunlöslichen Polykondensat aus Phenolen und Formaldehyd, Paraformaldehyd, Acetaldehyd oder deren Gemische im Gewichtsverhältnis synthetisches Polymerisat : Phenol-Aldehyd Polykondensat von 99 : 1 bis ca. 1 : 1, wobei die phenolischen Komponenten des Polykondensats zunächst mit einer wäßrigen Primärdispersion eines synthetischen Polymeren vermischt und in diesem Gemisch dann die Polykondensation mit den Aldehyden, die teilweise durch Ketone ersetzt sein können, unter üblichen Bedingungen durchgeführt worden ist, verwendet.

**2.** Verfahren nach Anspruch 1, dadurch gekennzeichnet, daß man es auf das Verkleben von Kunststoffolien sowie zur Verklebung von Kunststoffolien mit Metallen anwendet.

**3.** Verfahren nach Anspruch 1, dadurch gekennzeichnet, daß man es auf das Verkleben flächenförmiger Formkörper und Fasermaterialien anwendet.

**4.** Verfahren nach Anspruch 3, dadurch gekennzeichnet, daß man es auf die Herstellung von flächenförmigen Verbundmaterialien anwendet.

**5.** Verfahren nach Anspruch 1, dadurch gekennzeichnet, daß man es auf die Herstellung von Schleifmaterialien anwendet.

**6.** Verfahren nach den Ansprüchen 1 bis 5, dadurch gekennzeichnet, daß man als phenolische Komponenten solche eingesetzt, die eine Löslichkeit von weniger als 10 g in 100 g Wasser von 20 °C bei pH <5 aufweisen.

**7.** Verfahren nach den Ansprüchen 1 bis 6, dadurch gekennzeichnet, daß man als phenolische Komponenten Bisphenol A oder dessen Gemische mit Phenol, alkylsubstituierten Phenolen und/oder Hydroxybiphenyl einsetzt.

**8.** Verfahren nach den Ansprüchen 1 bis 9, dadurch gekennzeichnet, daß das Mischungsverhältnis synthetisches Polymerisat : Phenol-Aldehyd-Polykondensat 2 : 1 bis 49 : 1 beträgt.

9. Im wesentlichen schutzkolloidfreie Einkomponentensysteme auf Basis einer Kombination aus einer wäßrigen Primärdispersion eines synthetischen Polymeren, das Glycidyl-, Carbonyl-, N-Methylol-, N-Alkoxymethyl-, Ether-, Amino- und/oder Hydrazo-Gruppen sowie gegebenenfalls zusätzlich Carboxyl- oder Hydroxylgruppen enthält, und einem wasserunlöslichen Polykondensatz aus Phenolen und Formaldehyd, Paraformaldehyd, Acetaldehyd oder deren Gemische im Gewichtsverhältnis synthetisches Polymerisatz : Phenol-Aldehyd Polykondensat von 99 : 1 bis ca. 1 : 1, erhältlich durch Vermischen der phenolischen Komponenten des Polykondensats mit einer wäßrigen Primärdispersion eines synthetischen Polymeren und anschließende Durchführung der Polykondensation mit den Aldehyden, die teilweise durch Ketone ersetzt sein können, unter üblichen Bedingungen.

## Claims

1. A process for the adhesive bonding of films, moldings and fibrous and powder materials of plastics, paper, wood and metals with one another and each other, which comprises using a single-component system which is essentially free of protective colloids and is based on a combination of an aqueous primary dispersion of a synthetic polymer, which contains glycidyl, carbonyl, N-methylol, N-alkoxymethyl, ether, amino or hydrazo groups and may additionally contain carboxyl or hydroxyl groups, and a water-insoluble polycondensate of a phenol and formaldehyde, paraformaldehyde, acetaldehyde or a mixture thereof in the weight ratio of synthetic polymer to phenol/aldehyde polycondensate of from 99:1 to about 1:1, the phenolic components of the polycondensate being first mixed with an aqueous primary dispersion of a synthetic polymer, and the polycondensation with the aldehydes, some of which may be replaced by ketones, being then carried out in this mixture under conventional conditions.

2. A process as claimed in claim 1, which is used in the adhesive bonding of plastic films with one another and with metals.

3. A process as claimed in claim 1, which is used in the adhesive bonding of sheet-like moldings and fiber materials.

4. A process as claimed in claim 3, which is used for the production of sheet-like laminated materials.

5. A process as claimed in claim 1, which is used for the production of abrasive materials.

6. A process as claimed in any of claims 1 to 5, wherein the phenolic components used have a solubility of less than 10 g in 100 g of water at 20 °C and at pH <5.

7. A process as claimed in any of claims 1 to 6, wherein bisphenol A or a mixture of bisphenol A with phenol, and alkyl-substituted phenol or hydroxybiphenyl is used as the phenolic component.

8. A process as claimed in any of claims 1 to 9, wherein the ratio of synthetic polymer to phenol/aldehyde polycondensate in the mixture is from 2:1 to 49:1.

9. A single-component system which is essentially free of protective colloids and is based on a combination of an aqueous primary dispersion of a synthetic polymer, which contains glycidyl, carbonyl, N-methylol, N-alkoxymethyl, ether, amino or hydrazo groups and may additionally contain carboxyl or hydroxyl groups, and a water-insoluble polycondensate of a phenol and formaldehyde, paraformaldehyde, acetaldehyde or a mixture thereof in the weight ratio of synthetic polymer to phenol/aldehyde polycondensate of from 99:1 to about 1:1, obtainable by mixing the phenolic components of the polycondensate with an aqueous primary dispersion of a synthetic polymer and then carrying out the polycondensation with the aldehydes, some of which may be replaced by ketones, under conventional conditions.

## Revendications

1. Procédé pour coller des feuilles, des corps ou articles moulés, comme aussi des matières fibreuses et pulvérulentes en matières plastiques, papier, bois et métaux, mutuellement ou les uns avec les autres, caractérisé en ce que l'on utilise des systèmes à un composant, sensiblement dépourvus de colloïdes protecteurs, à base d'une combinaison d'une dispersion aqueuse primaire d'un polymère synthétique,

qui contient des radicaux glycidyle, carbonyle, N-méthylol, N-alcoxyméthyle, éther, amino et/ou hydrazo, comme éventuellement complémentairement aussi des radicaux carboxyle ou hydroxyle et d'un produit de polycondensation, insoluble dans l'eau, constitué de phénols et de formaldéhyde, paraformaldéhyde, acétaldéhyde, ou leurs mélanges, dans le rapport pondéral polymère synthétique:produit de polycondensation phénol-aldéhyde de 99:1 à environ 1:1, où on a d'abord mélangé les composants phénoliques du produit de polycondensation avec une dispersion aqueuse primaire d'un polymère synthétique et on a ensuite procédé à la polycondensation avec les aldéhydes, qui peuvent être partiellement remplacés par des cétones, dans le mélange réalisé au préalable et dans les conditions habituelles.

**2.** Procédé selon la revendication 1, caractérisé en ce qu'on l'utilise pour le collage de feuilles de matière plastique, comme aussi pour le collage de feuilles de matière plastique avec des métaux.

**3.** Procédé suivant la revendication 1, caractérisé en ce qu'on l'utilise pour le collage de corps ou articles moulés de forme plane et de matières fibreuses.

**4.** Procédé suivant la revendication 3, caractérisé en ce qu'on l'utilise pour la fabrication de matériaux composites ou stratifiés de forme plane.

**5.** Procédé suivant la revendication 1, caractérisé en ce qu'on l'utilise pour la fabrication de matériaux de meulage, ponçage ou de polissage ou d'affutage.

**6.** Procédé suivant les revendications 1 à 5, caractérisé en ce que l'on utilise, à titre de composants phénoliques, ceux qui présentent une solubilité inférieure à 10 g dans 100 g d'eau à 20 °C et à un pH inférieur à 5.

**7.** Procédé suivant les revendications 1 à 6, caractérisé en ce que l'on utilise, à titre de composantes phénoliques, le bisphénol A ou ses mélanges avec le phénol, des phénols alkylsubstitués et/ou l'hydroxybiphényle.

**8.** Procédé suivant les revendications 1 à 9, caractérisé en ce que le rapport de mélange polymère synthétique:produit de polycondensation phénol-aldéhyde varie de 2:1 à 49:1.

**9.** Systèmes à un composant, sensiblement dépourvus de colloïdes protecteurs, à base d'une combinaison d'une dispersion aqueuse primaire d'un polymère synthétique, qui contient des radicaux glycidyle, carbonyle, N-méthylol, N-alcoxyméthyle, éther, amino et/ou hydrazo, comme éventuellement complémentairement aussi des radicaux carboxyle ou hydroxyle et d'un produit de polycondensation, insoluble dans l'eau, constitué de phénols et de formaldéhyde, paraformaldéhyde, acétaldéhyde, ou leurs mélanges, dans le rapport pondéral polymère synthétique:produit de polycondensation phénol-aldéhyde de 99:1 à environ 1:1, que l'on peut obtenir par le mélange des composants phénoliques du produit de polycondensation avec une dispersion aqueuse primaire d'un polymère synthétique et par la mise en oeuvre subséquente de la polycondensation avec des aldéhydes, qui peuvent être partiellement remplacés par des cétones, dans des conditions usuelles.